# EUROPEAN PATENT SPECIFICATION

(11) **EP 2 841 504 B1**
(45) Date of publication and mention of the grant of the patent: **30.11.2016**
(21) Application number: 13720657.9
(22) Date of filing: 19.04.2013
(51) Int. Cl.: C08L 77/02, C08L 77/06, C08K 5/053, C08L 53/02, C08K 7/14

(54) **THERMOPLASTIC POLYAMIDE COMPOSITION**
THERMOPLASTISCHE POLYAMIDZUSAMMENSETZUNG
COMPOSITION DE POLYAMIDE THERMOPLASTIQUE

(30) Priority: 23.04.2012 US 201261636898 P
(43) Date of publication of application: 04.03.2015
(73) Proprietor: E. I. du Pont de Nemours and Company, Wilmington, DE 19898 (US)
(72) Inventor: THOMPSON, Jennifer, Leigh, Newark, DE 19713 (US); PALMER, Robert, J., F-74520 Jonzier-Epagny (FR); KOBAYASHI, Toshikazu, Chadds Ford, PA 19317 (US); WERKHEISER, Steven, Charles, Bear, DE 19701 (US)
(74) Representative: Heinemann, Monica
(86) International application number: PCT/US2013/037280
(87) International publication number: WO 2013/163012

(56) References cited:
- EP-A1- 1 323 766
- US-A1- 2011 028 621
- US-A1- 2011 028 628

## Description

### FIELD OF THE INVENTION

The present invention relates to the field of molded and extruded thermoplastic polyamide articles having improved aging characteristics.

### BACKGROUND OF THE INVENTION

High temperature resins based on polyamides possess desirable chemical resistance, processability and heat resistance. This makes them particularly well suited for demanding high performance automotive and electrical/electronics applications. There is a current and general desire in the automotive field to have high temperature resistant structures since temperatures higher than 150°C, even higher than 200°C, are often reached in under-hood areas of automobiles. When plastic parts are exposed to such high temperatures for a prolonged period, such as in automotive under-the-hood applications or in electrical/electronics applications, the mechanical properties generally tend to decrease due to the thermo-oxidation of the polymer. This phenomenon is called heat aging.

In an attempt to improve heat aging characteristics, polyhydric alcohols have been found to give significantly improved heat aging characteristics as disclosed in US patent application publication US 2010-0029819 A1 (Palmer et al). However, molded articles derived from the polyamide compositions comprising the polyhydric alcohols.have a tendency to undergo surface whitening upon aging at high humidity; which is an undesirable feature for many applications.

There remains a need for thermoplastic compositions that are suitable for manufacturing articles, that exhibit good mechanical properties after long-term high temperature exposure; and have desirable visual properties; that is, exhibit no whitening or a low degree of whitening, upon aging at high humidity.

EP 1041109 discloses a polyamide composition comprising a polyamide resin, a polyhydric alcohol having a melting point of 150 to 280 °C, that has good fluidity and mechanical strength and is useful in injection welding techniques.

US Patent No. 6,262,221 discloses a polyamide resin comprising a poly(ethylene glycol) diester as a plasticizer.

US 2012/0029133 discloses a polyamide resin comprising a styrene block copolymer as a plasticizer.

Chinese patent application abstract CN 2011-102000646 discloses a flameproof material comprising a polymer, magnesium hydroxide, triorthocresol phosphate, and a toughener selected from a group including styrene-isoprene-styrene block copolymer.

### SUMMARY OF THE INVENTION

Disclosed is a thermoplastic polyamide composition comprising
a. a polyamide resin having a melting point and/or glass transition temperature;
b. 0.1 to 10 weight percent of one or more polyhydric alcohols having more than two hydroxyl groups as defined in claim 1;
c. 0.5 to 5 weight percent of one or more anti-whitening agents selected from the group consisting of poly(ethylene glycol), poly(ethylene glycol) diesters, poly(propylene glycol), poly(propylene glycol) diesters; and styrene-isoprene-styrene block copolymers; and mixtures of these;
d. 0.02 to 1 weight percent of a lubricant;
e. 10 to 60 weight percent of one or more reinforcement agents; and
f. 0 to 50 weight percent of a polymeric toughener comprising a reactive functional group and/or a metal salt of a carboxylic acid;
with the proviso that the thermoplastic composition comprises less than 15 weight percent magnesium hydroxide and less than 0.20 weight percent zinc compounds selected from the group consisting of zinc borate and zinc oxide; and with the further proviso that at least 2 weight percent of styrene-isoprene-styrene block copolymers are present when no other anti-whitening agents selected from the group are present; and wherein all weight percentages are based on the total weight of the polyamide composition.

Also disclosed are molded or extruded articles made from the thermoplastic polyamide composition disclosed above.

### DETAILED DESCRIPTION OF THE INVENTION

Herein melting points and glass transitions are as determined with differential scanning calorimetry (DSC) at a scan rate of 10 °C/min in the first heating scan, wherein the melting point is taken at the maximum of the endothermic peak and the glass transition, if evident, is considered the mid-point of the change in enthalpy.

For the purposes of the description, unless otherwise specified, "high-temperature" means a temperature at or higher than 170 °C, preferably at or higher than 210 °C, and most preferably at or higher than 230 °C.

In the present invention, unless otherwise specified, "long-term" refers to an aging period equal or longer than 500 hrs.

As used herein, the term "high heat stability", as applied to the polyamide composition disclosed herein or to an article made from the composition, refers to the retention of physical properties (for instance, tensile strength) of 2 mm thick molded test bars consisting of the polyamide composition that are exposed to air oven aging (AOA) conditions at a test temperature at 210 °C or 230 °C for a test period of at least 500 h, in an atmosphere of air, and then tested according to ISO 527-2/1 BA method. The physical properties of the test bars are compared to that of unexposed controls that have identical composition and shape, and are expressed in terms of "% retention". In a preferred embodiment the test temperature is at 210 °C, the test period is at 500 hours and the exposed test bars have a % retention of tensile strength of at least 50 %. Herein "high heat stability" means that said molded test bars, on average, meet or exceed a retention for tensile strength of 50 % when exposed at a test temperature at 210 °C for a test period of at least 500 h. Compositions exhibiting a higher retention of physical properties for a given exposure temperature and time period have better heat stability.

The terms "at 170 °C," "at 210 °C" and "at 230 °C" refer to the nominal temperature of the environment to which the test bars are exposed; with the understanding that the actual temperature may vary by +/- 2 °C from the nominal test temperature.

The thermoplastic polyamide compositions of various embodiments of the invention comprise a polyamide resin. The polyamide resins are condensation products of one or more dicarboxylic acids and one or more diamines, and/or one or more aminocarboxylic acids, and/or ring-opening polymerization products of one or more cyclic lactams. Suitable cyclic lactams are caprolactam and laurolactam. Polyamides may be fully aliphatic or semi-aromatic.

Fully aliphatic polyamides are formed from aliphatic and alicyclic monomers such as diamines, dicarboxylic acids, lactams, aminocarboxylic acids, and their reactive equivalents. A suitable aminocarboxylic acid is 11-aminododecanoic acid. Suitable lactams are caprolactam and laurolactam. In the context of this invention, the term "fully aliphatic polyamide" also refers to copolymers derived from two or more such monomers and blends of two or more fully aliphatic polyamides. Linear, branched, and cyclic monomers may be used.

Carboxylic acid monomers comprised in the fully aliphatic polyamides include, but are not limited to aliphatic carboxylic acids, such as for example adipic acid (C6), pimelic acid (C7), suberic acid (C8), azelaic acid (C9), decanedioic acid (C10), dodecanedioic acid (C12), tridecanedioic acid (C13), tetradecanedioic acid (C14), pentadecanedioic acid (C15), hexadecanedioic acid (C16) and octadecanedioic acid (C18). Diamines can be chosen among diamines having four or more carbon atoms, including, but not limited to tetramethylene diamine, hexamethylene diamine, octamethylene diamine, decamethylene diamine, dodecamethylene diamine, 2-methylpentamethylene diamine, 2-ethyltetramethylene diamine, 2-methyloctamethylenediamine; trimethylhexamethylenediamine, meta-xylylene diamine, and/or mixtures thereof.

The semi-aromatic polyamide is a homopolymer, a copolymer, a terpolymer or more advanced polymers formed from monomers containing aromatic groups. One or more aromatic carboxylic acids may be terephthalate or a mixture of terephthalate with one or more other carboxylic acids, such as isophthalic acid, phthalic acid, 2-methyl terephthalic acid and naphthalic acid. In addition, the one or more aromatic carboxylic acids may be mixed with one or more aliphatic dicarboxylic acids, as disclosed above. Alternatively, an aromatic diamine such as meta-xylylene diamine (MXD) can be used to provide a semi-aromatic polyamide, an example of which is MXD6, a homopolymer comprising MXD and adipic acid.

Preferred polyamides disclosed herein are homopolymers or copolymers wherein the term copolymer refers to polyamides that have two or more amide and/or diamide molecular repeat units. The homopolymers and copolymers are identified by their respective repeat units. For copolymers disclosed herein, the repeat units are listed in decreasing order of mole % repeat units present in the copolymer. The following list exemplifies the abbreviations used to identify monomers and repeat units in the homopolymer and copolymer polyamides (PA): HMD hexamethylene diamine (or 6 when used in combination with a diacid)

| | |
|---|---|
| T | Terephthalic acid |
| AA | Adipic acid |
| DMD | Decamethylenediamine |
| 6 | €-Caprolactam |
| DDA | Decanedioic acid |
| DDDA | Dodecanedioic acid |
| TDDA | Tetradecanedioic acid |
| HDDA | Hexadecanedioic acid |
| ODDA | Octadecanedioic acid |
| I | Isophthalic acid |
| MXD | meta-xylylene diamine |
| TMD | 1,4-tetramethylene diamine |
| 4T | polymer repeat unit formed from TMD and T |
| 6T | polymer repeat unit formed from HMD and T |
| DT | polymer repeat unit formed from 2-MPMD and T |
| MXD6 | polymer repeat unit formed from MXD and AA |
| 66 | polymer repeat unit formed from HMD and AA |
| 10T | polymer repeat unit formed from DMD and T |
| 410 | polymer repeat unit formed from TMD and DDA |
| 510 | polymer repeat unit formed from 1,5-pentanediamine and DDA |
| 610 | polymer repeat unit formed from HMD and DDA |
| 612 | polymer repeat unit formed from HMD and DDDA |
| 614 | polymer repeat unit formed from HMD and TDDA |
| 616 | polymer repeat unit formed from HMD and HDDA |
| 618 | polymer repeat unit formed from HMD and ODDA |
| 6 | polymer repeat unit formed from €-caprolactam |
| 11 | polymer repeat unit formed from 11-aminoundecanoic acid |
| 12 | polymer repeat unit formed from 12-aminododecanoic acid |

Note that in the art the term "6" when used alone designates a polymer repeat unit formed from €-caprolactam. Alternatively "6" when used in combination with a diacid such as T, for instance 6T, the "6" refers to HMD. In repeat units comprising a diamine and diacid, the diamine is designated first. Furthermore, when "6" is used in combination with a diamine, for instance 66, the first "6" refers to the diamine HMD, and the second "6" refers to adipic acid. Likewise, repeat units derived from other amino acids or lactams are designated as single numbers designating the number of carbon atoms.

In one embodiment the polyamide composition comprises a one or more polyamides selected from the group consisting of
**Group (I) polyamides** having a melting point of less than 210 °C, and comprising an aliphatic or semiaromatic polyamide selected from the group consisting of poly(pentamethylene decanediamide) (PA510), poly(pentamethylene dodecanediamide) (PA512), poly(ε-caprolactam/hexamethylene hexanediamide) (PA6/66), poly(ε-caprolactam/hexamethylene decanediamide) (PA6/610), poly(ε-caprolactam/hexamethylene dodecanediamide) (PA6/612), poly(hexamethylene tridecanediamide) (PA613), poly(hexamethylene pentadecanediamide) (PA615), poly(ε-caprolactam/tetramethylene terephthalamide) (PA6/4T), poly(ε-caprolactam/hexamethylene terephthalamide) (PA6/6T), poly(ε-caprolactam/decamethylene terephthalamide) (PA6/10T), poly(ε-caprolactam/dodecamethylene terephthalamide) (PA6/12T), poly(hexamethylene decanediamide/hexamethylene terephthalamide) (PA610/6T), poly(hexamethylene dodecanediamide/hexamethylene terephthalamide) (PA612/6T), poly(hexamethylene tetradecanediamide/hexamethylene terephthalamide) (PA614/6T), poly(ε-caprolactam/ hexamethylene isophthalamide/hexamethylene terephthalamide) (PA6/6I/6T), poly(ε-caprolactam/hexamethylene hexanediamide/hexamethylene decanediamide) (PA6/66/610), poly(ε-caprolactam/hexamethylene hexanediamide/hexamethylene dodecanediamide) (PA6/66/612), poly(ε-caprolactam/hexamethylene hexanediamide/hexamethylene decanediamide/hexamethylene dodecanediamide) (PA6/66/610/612), poly(2-methylpentamethylene hexanediamide/hexamethylene hexanediamide/hexamethylene terephthamide) (PA D6/66/6T), poly(2-methylpentamethylene hexanediamide/hexamethylene hexanediamide/) (PA D6/66), poly(decamethylene decanediamide) (PA1010), poly(decamethylene dodecanediamide) (PA1012), poly(decamethylene decanediamide/decamethylene terephthalamide) (PA1010/10T) poly(decamethylene decanediamide/dodecamethylene decanediamide/ decamethylene terephthalamide/dodecamethylene terephthalamide (PA1010/1210/10T/12T). poly(11-aminoundecanamide) (PA11), poly(11-aminoundecanamide/tetramethylene terephthalamide) (PA11/4T), poly(11-aminoundecanamide/hexamethylene terephthalamide) (PA11/6T), poly(11-aminoundecanamide/decamethylene terephthalamide) (PA11/10T), poly(11-aminoundecanamide/dodecamethylene terephthalamide) (PA11/12T), poly(12-aminododecanamide) (PA12), poly(12-aminododecanamide/tetramethylene terephthalamide) (PA12/4T), poly(12-aminododecanamide/hexamethylene terephthalamide) (PA12/6T), poly(12-aminododecanamide/decamethylene terephthalamide) (PA12/10T) poly(dodecamethylene dodecanediamide) (PA1212), poly(dodecamethylene dodecanediamideldodecamethylene dodecanediamide/dodecamethylene terephthalamide)) (PA1212/12T), poly(hexamethylene hexadecanediamide) (PA616), and poly(hexamethylene octadecanediamide) (PA618); Group (II) polyamides having a melting point of at least 210 °C. and comprising an aliphatic polyamide selected from the group consisting of poly(tetramethylene hexanediamide) (PA46), poly(ε-caprolactam) (PA 6), poly(hexamethylene hexanediamide/(ε-caprolactam/) (PA 66/6) poly(hexamethylene hexanediamide) (PA 66), poly(hexamethylene hexanediamide/hexamethylene decanediamide) (PA66/610), poly(hexamethylene hexanediamide/hexamethylene dodecanediamide) (PA66/612), poly(hexamethylene hexanediamide/decamethylene decanediamide) (PA66/1010), poly(hexamethylene decanediamide) (PA610), poly(hexamethylene dodecanediamide) (PA612), poly(hexamethylene tetradecanediamide) (PA614), and poly(tetramethylene hexanediamide/2-methylpentamethylene hexanediamide) (PA46/D6);
**Group (III) polyamides** having a melting point of at least 210 °C, and comprising
   (aa) about 20 to about 35 mole percent semiaromatic repeat units derived from monomers selected from one or more of the group consisting of:
      (i) aromatic dicarboxylic acids having 8 to 20 carbon atoms and aliphatic diamines having 4 to 20 carbon atoms; and
   (bb) about 65 to about 80 mole percent aliphatic repeat units derived from monomers selected from one or more of the group consisting of:
      (ii) an aliphatic dicarboxylic acid having 6 to 20 carbon atoms and said aliphatic diamine having 4 to 20 carbon atoms; and
      (iii) a lactam and/or aminocarboxylic acid having 4 to 20 carbon atoms;
**Group (IV) polyamides** comprising
   (cc) about 50 to about 95 mole percent semiaromatic repeat units derived from monomers selected from one or more of the group consisting of:
      (i) aromatic dicarboxylic acids having 8 to 20 carbon atoms and aliphatic diamines having 4 to 20 carbon atoms; and
   (dd) about 5 to about 50 mole percent aliphatic repeat units derived from monomers selected from one or more of the group consisting of:
      (ii) an aliphatic dicarboxylic acid having 6 to 20 carbon atoms and said aliphatic diamine having 4 to 20 carbon atoms; and
      (iii) a lactam and/or aminocarboxylic acid having 4 to 20 carbon atoms;
**Group (V) polyamides** having a melting point of at least 260 °C, comprising
   (ee) greater than 95 mole percent semiaromatic repeat units derived from monomers selected from one or more of the group consisting of:
      (i) aromatic dicarboxylic acids having 8 to 20 carbon atoms and aliphatic diamines having 4 to 20 carbon atoms; and
   (ff) less than 5 mole percent aliphatic repeat units derived from monomers selected from one or more of the group consisting of:
      (ii) an aliphatic dicarboxylic acid having 6 to 20 carbon atoms and said aliphatic diamine having 4 to 20 carbon atoms;
      (iii) a lactam and/or aminocarboxylic acid having 4 to 20 carbon atoms; and
**Group (VI) polyamides** having no melting point, and selected from the group consisting of poly(hexamethylene isophthalamide/ hexamethylene terephthalamide) (6I/6T) and poly(hexamethylene isophthalamide/hexamethylene terephthalamide/hexamethylene hexanediamide) (6I/6T/66).

Group (I) polyamides may have semiaromatic repeat units to the extent that the melting point is less than 210 °C and generally the semiaromatic polyamides of the group have less than 40 mole percent semiaromatic repeat units. Semiaromatic repeat units are defined as those derived from monomers selected from one or more of the group consisting of: aromatic dicarboxylic acids having 8 to 20 carbon atoms and aliphatic diamines having 4 to 20 carbon atoms.

Another embodiment is a molded or extruded thermoplastic article wherein said polyamide resin is selected from Group (III) polyamides selected from the group consisting of poly(tetramethylene hexanediamide/tetramethylene terephthalamide) (PA46/4T), poly(tetramethylene hexanediamide/hexamethylene terephthalamide) (PA46/6T), poly(tetramethylene hexanediamide/2-methylpentamethylene hexanediamide/decamethylene terephthalamide)_PA46/D6/10T), poly(hexamethylene hexanediamide/hexamethylene terephthalamide) (PA66/6T), poly(hexamethylene hexanediamide/hexamethylene isophthalamide/hexamethylene terephthalamide PA66/6I/6T. and poly(hexamethylene hexanediamide/2-methylpentamethylene hexanediamide /hexamethylene terephthalamide (PA66/D6/6T); and a most preferred Group (III) polyamide is PA 66/6T.

Another embodiment is a molded or extruded thermoplastic article wherein said polyamide resin is selected from Group (IV) polyamides selected from the group consisting of poly(tetramethylene terephthalamide/hexamethylene hexanediamide) (PA4T/66), poly(tetramethylene terephthalamide/e-caprolactam) (PA4T/6), poly(tetramethylene terephthalamide/hexamethylene dodecanediamide) (PA4T/612), poly(tetramethylene terephthalamide/2-methylpentamethylene hexanediamide/hexamethylene hexanediamide) (PA4T/D6/66), poly(hexamethylene terephthalamide/2-methylpentamethylene terephthalamide/hexamethylene hexanediamide) (PA6T/DT/66), poly(hexamethylene terephthalamide/hexamethylene hexanediamide) PA6T/66, poly(hexamethylene terephthalamide /hexamethylene decanediamide) (PA6T/610), poly(hexamethylene terephthalamide/hexamethylene tetradecanediamide) (PA6T/614), poly(nonamethylene terephthalamide/nonamethylene decanediamide) (PA9T/910), poly(nonamethylene terephthalamide/nonamethylene dodecanediamide) (PA9T/912), poly(nonamethylene terephthalamide/11-aminoundecanamide) (PA9T/11), poly(nonamethylene terephthalamide/12-aminododecanamide) (PA9T/12), poly(decamethylene terephthalamide/11-aminoundecanamide) (PA 10T/11), poly(decamethylene terephthalamide/12-aminododecanamide) (PA10T/12) poly(decamethylene terephthalamide/decamethylene decanediamide) (PA10T/1010), poly(decamethylene terephthalamide/decamethylene dodecanediamide) (PA10T/1012), poly(decamethylene terephthalamide/tetramethylene hexanediamide) (PA10T/46), poly(decamethylene terephthalamide/ε-caprolactam) (PA10T/6), poly(decamethylene terephthalamide/hexamethylene hexanediamide) (PA10T/66), poly(dodecamethylene terephthalamide/dodecamethylene dodecanediamide) (PA12T/1212), poly(dodecamethylene terephthalamide/e-caprolactam) (PA12T/6), and poly(dodecamethylene terephthalamide/hexamethylene hexanediamide) (PA12T/66); and a most preferred Group (IV) polyamide is PA6T/66.

Another embodiment is a molded or extruded thermoplastic article wherein said polyamide resin is selected from Group (V) polyamides selected from the group consisting of poly(tetramethylene terephthalamide/2-methylpentamethylene terephthalamide) PA4T/DT, poly(tetramethylene terephthalamide/ hexamethylene terephthalamide) PA4T/6T, poly(tetramethylene terephthalamide/decamethylene terephthalamide) PA4T/10T, poly(tetramethylene terephthalamide/dodecamethylene terephthalamide)PA4T/12T, poly(tetramethylene terephthalamide/2-methylpentamethylene terephthalamide/ hexamethylene terephthalamide) (PA4T/DT/6T), poly(tetramethylene terephthalamide/hexamethylene terephthalamide/2-methylpentamethylene terephthalamide) (PA4T/6T/DT), poly(hexamethylene terephthalamide/2-methylpentamethylene terephthalamide) (PA6T/DT), poly(hexamethylene hexanediamide/hexamethylene isophthalamide) (PA 6T/6I), poly(hexamethylene terephthalamide/decamethylene terephthalamide) PA6T/10T, poly(hexamethylene terephthalamide/dodecamethylene terephthalamide) (PA6T/12T), poly(hexamethylene terephthalamide/2-methylpentamethylene terephthalamide/poly(decamethylene terephthalamide) (PA6T/DT/10T), poly(hexamethylene terephthalamide/decamethylene terephthalamide/ dodecamethylene terephthalamide) (PA6T/10T/12T), poly(decamethylene terephthalamide) (PA10T), poly(decamethylene terephthalamide/tetramethylene terephthalamide) (PA10T/4T), poly(decamethylene terephthalamide/2-methylpentamethylene terephthalamide) (PA10T/DT), poly(decamethylene terephthalamide/dodecamethylene terephthalamide) (PA10T/12T), poly(decamethylene terephthalamide/2-methylpentamethylene terephthalamide/(decamethylene terephthalamide) (PA10T/DT/12T). poly(dodecamethylene terephthalamide) (PA12T), poly(dodecamethylene terephthalamide)/tetramethylene terephthalamide) (PA12T/4T), poly(dodecamethylene terephthalamide)/hexamethylene terephthalamide) PA12T/6T, poly(dodecamethylene terephthalamide)/decamethylene terephthalamide) (PA12T/10T), and poly(dodecamethylene terephthalamide)/2-methylpentamethylene terephthalamide) (PA12T/DT); and a most preferred_Group (V) Polyamide is PA6T/DT.

In various embodiments the polyamide is a Group (I) Polyamide, Group (II) Polyamide, Group (III) Polyamide, Group (IV) Polyamide, Group (V) Polyamide or Group (VI) Polyamide, respectively. In one embodiment the polyamide resin is selected from the group consisting of poly(ε-caprolactam), poly(hexamethylene hexanediamide), poly(hexamethylene hexanediamide/hexamethylene terephthalamide), and poly(hexamethylene terephthalamide/ hexamethylene hexanediamide).

The polyamides may also be blends of two or more polyamides. Preferred blends include those selected from the group consisting of Group (I) and Group (II) Polyamides; Group (I) and Group (III) Polyamide, Group (I) and Group (VI) Polyamides, Group (II) and Group (III) Polyamides, Group (II) and Group (IV) Polyamides, Group (II) and Group (V) Polyamides, Group (II) and Group (VI) Polyamides, Group (III) and Group (VI) Polyamides, and Group (IV) and Group (V) Polyamides.

A preferred blend includes Group (II) and (V) Polyamides, and a specific preferred blend includes poly(hexamethylene hexanediamide) (PA 66) and poly(hexamethylene terephthalamide/2-methylpentamethylene terephthalamide) (PA 6T/DT).

Another preferred blend includes Group (II) and Group (III) Polyamides and a specific preferred blend includes poly(ε-caprolactam) (PA6) and poly(hexamethylene hexanediamide/hexamethylene terephthalamide (PA66/6T).

In various embodiments 39 to 89.38 weight percent of polyamide resin, or 49 to 89.38 weight percent of polyamide resin, is present in the thermoplastic polyamide composition.

The thermoplastic polyamide composition comprises 0.1 to 10 weight percent of one or more polyhydric alcohols having more than two hydroxyl groups as defined in claim 1. They have a number average molecular weight (Mₙ) of less than 2000, as determined for polymeric materials with gel permeation chromatography (GPC)

Examples of polyhydric alcohol containing more than two hydroxyl groups include glycerol, trimethylolpropane, 2,3-di-(2'-hydroxyethyl)-cyclohexan-1-ol, hexane-1,2,6-triol, 1,1,1-tris-(hydroxymethyl)ethane, 3-(2'-hydroxyethoxy)-propane-1,2-diol, 3-(2'-hydroxypropoxy)-propane-1,2-diol, 2-(2'-hydroxyethoxy)-hexane-1,2-diol, 6-(2'-hydroxypropoxy)-hexane-1,2-diol, 1,1,1-tris-[(2'-hydroxyethoxy)-methyl]-ethane, 1,1,1-tris-[(2'-hydroxypropoxy)-methyl]-propane, 1,1,1-tris-(4'-hydroxyphenyl)-ethane, 1,1,1-tris-(hydroxyphenyl)-propane, 1,1,3-tris-(dihydroxy-3-methylphenyl)-propane, 1,1,4-tris-(dihydroxyphenyl)-butane, 1,1,5-tris-(hydroxyphenyl)-3-methylpentane, di-trimethylopropane, trimethylolpropane ethoxylates, or trimethylolpropane propoxylates; pentaerythritol, dipentaerythritol, tripentaerythritol; cyclodextrin, D-mannose, glucose, galactose, sucrose, fructose, xylose, arabinose, D-mannitol, D-sorbitol, D-or L-arabitol, xylitol, iditol, talitol, allitol, altritol, guilitol, erythritol, threitol, and D-gulonic-y-lactone.

Preferred polyhydric alcohols include those having a pair of hydroxyl groups which are attached to respective carbon atoms which are separated one from another by at least one atom. Especially preferred polyhydric alcohols are those in which a pair of hydroxyl groups is attached to respective carbon atoms which are separated one from another by a single carbon atom.

Preferably, the polyhydric alcohol used in the thermoplastic composition is pentaerythritol, dipentaerythritol, tripentaerythritol, di-trimethylolpropane, D-mannitol, D-sorbitol and xylitol. More preferably, the polyhydric alcohol used is dipentaerythritol and/or tripentaerythritol. A most preferred polyhydric alcohol is dipentaerythritol.

In various embodiments the content of said polyhydric alcohol in the thermoplastic composition is 0.25-10 weight percent, preferably 0.25-8 weight percent, more preferably 1.0 - 8 weight percent and 1.0 - 5 weight percent, and most preferably 1 - 4 weight percent, based on the total weight of the thermoplastic composition.

The thermoplastic polyamide composition comprises (c) 0.5 to 5 weight percent of one or more anti-whitening agents selected from the group consisting of poly(ethylene glycol), poly(ethylene glycol) diesters, poly(propylene glycol), poly(propylene glycol) diesters; and styrene-isoprene-styrene block copolymers; and mixtures of these; with the proviso that at least 2 weight percent of styrene-isoprene-styrene block copolymer is present when no other anti-whitening agents selected from the group are present. The term poly(ethylene glycol) includes materials having Mₙ of about 400 and higher and includes those materials often referred to as polyethylene oxides having Mₙ greater than 5,000 and preferably greater than 10,000.

Useful anti-whitening agents for the composition include Plasthall® 809, a polyethylene glycol 400 di-2-ethylhexoate available from C.P. Hall Company; PEG 6000J, a poly(ethylene glycol) manufactured by Lion Corporation, Japan; and Kraton D1116AT, a styrene-butadiene-styrene block copolymer (SBS), available from Kraton Performance Polymers. Herein anti-whitening agents are materials, that when present in the thermoplastic compositions in the presence of lubricants disclosed herein, significantly impede or prevent the whitening of molded or extruded parts upon ageing. Herein ageing is performed at 85 °C and 85 % relative humidity for periods of time, typically 1 day and 7 days. In various embodiments 0.5 to 3.0 weight percent, 0.75 to 3.0 weight percent, and 0.75 to 2.0 weight percent of anti-whitening agent are present in the thermoplastic polyamide composition. In one embodiment the anti-whitening agent is selected from the group consisting of poly(ethylene glycol) diesters and styrene-isoprene-styrene block copolymers. In a preferred embodiment the anti-whitening agent is selected from the group consisting, of polyethylene glycol and poly(ethylene glycol) diesters.

The thermoplastic polyamide composition comprises (d) 0.02 to 1 weight percent, and preferably 0.02 to 0.8 weight percent and 0.05 to 0.8 weight percent, of a lubricant. Preferably the lubricant is selected from the group consisting of fatty acids, fatty acid esters, fatty acid amides, fatty acid metal salts (e.g. aluminum stearate), and oxidized polyethylene wax. By "fatty acid" herein means carboxyl groups with the fatty acids, fatty acid esters, fatty acid amides, and fatty acid metal salts have 10, and preferably 12 or 16, or more aliphatic carbon atoms linked in a linear or branched chain. Preferably the term "fatty acid" comprises 10 to 22 carbon atoms in a linear carbon chain. Preferably 0.05 to 0.5, and more preferably 0.05 to 0.25 weight percent of lubricant (d) is present, based on the total weight of the thermoplastic composition.

Examples of fatty acids include stearic acid, oleic acid, erucic acid, and behenic acid.

Examples of fatty acid esters include pentaerythritol tetrastearate, stearyl stearate, and montanic acid esters.

Examples of fatty acid metal salts include aluminum stearate, sodium montanate, and calcium montanate.

Examples of the fatty acid amide include methylenebisstearylamide, methylenebislaurylamide, ethylenebisstearylamide, ethylenebislaurylamide, methylenebehenylamide, ethylenebisbehenylamide, dioctadecyladipamide, dioctadecylsuccinamide, dihexyladipamide, dihexylsuccinamide, distearyladipamide, distearylsuccinamide, eruccamide, stearylamide, oleamide, oleyl palmitamide, erucyl stearamide, and N-stearylerucamide. N-stearylerucamide is a preferred fatty acid amide compound.

Useful commercial lubricants for the composition include Kemamide E180 lubricant is N-stearylerucamide, CAS No. [10094-45-8], available from Chemtura Corp., Philadelphia, PA; Crodamide® 212 lubricant, a stearyl erucamide available from Croda Chemicals, Hull UK; Licowax OP lubricant manufactured by Clariant Corp., Charlotte, NC; PED 191 lubricant, an oxidized polyethylene wax available from Clariant Corp., Charlotte, NC; Licomont® CaV 102 lubricant, a fine grain calcium montanate available from Clariant Corp.; Hostamont® NAV 101 lubricant, a sodium montanate manufactured by Clariant, Muttenz, Switzerland; aluminum distearate, a wax supplied by PMC Global, Inc. Sun Valley, CA, USA; and Loxiol® VPG 861 lubricant, a pentaerythritol tetrastearate, manufactured by Cognis, Dusseldorf, Germany; Vestowax AO1535 lubricant, available from Evonik Industries, Germany; Acrawax® C lubricant, and N,N'-ethylene bisstearamide from Lonza Chemical Co.

The thermoplastic polyamide composition comprises 10 to about 60 weight percent, and preferably about 12.5 to 55 weight percent and 15 to 50 weight percent, of one or more reinforcement agents. The reinforcement agent may be any filler with the proviso that the thermoplastic composition comprises less than 15 weight percent magnesium hydroxide and preferably less than 10 weight percent, and more preferably less than 1 weight percent magnesium hydroxide. The reinforcement agent is preferably selected from the group consisting calcium carbonate, glass fibers with circular and noncircular cross-section, glass flakes, glass beads, carbon fibers, talc, mica, wollastonite, calcined clay, kaolin, diatomite, magnesium sulfate, magnesium silicate, barium sulfate, titanium dioxide, sodium aluminum carbonate, barium ferrite, potassium titanate and mixtures thereof. In preferred embodiments the reinforcing agent is selected from the group consisting of glass fiber and glass fiber with noncircular cross-section. The glass fiber may have sizing or coupling agents, organic or inorganic materials that improve the bonding between glass and the polyamide resin.

Glass fibers with noncircular cross-section refer to glass fiber having a cross section having a major axis lying perpendicular to a longitudinal direction of the glass fiber and corresponding to the longest linear distance in the cross section. The non-circular cross section has a minor axis corresponding to the longest linear distance in the cross section in a direction perpendicular to the major axis. The non-circular cross section of the fiber may have a variety of shapes including a cocoon-type (figure-eight) shape, a rectangular shape; an elliptical shape; a roughly triangular shape; a polygonal shape; and an oblong shape. As will be understood by those skilled in the art, the cross section may have other shapes. The ratio of the length of the major axis to that of the minor access is preferably between about 1.5:1 and about 6:1. The ratio is more preferably between about 2:1 and 5:1 and yet more preferably between about 3:1 to about 4:1. Suitable glass fiber are disclosed in EP 0 190 001 and EP 0 196 194.

The thermoplastic polyamide composition, optionally, comprises 0 to 50 weight percent of a polymeric toughener comprising a reactive functional group and/or a metal salt of a carboxylic acid. In one embodiment the composition comprises 2 to 20 weight percent polymeric toughener selected from the group consisting of: a copolymer of ethylene, glycidyl (meth)acrylate, and optionally one or more (meth)acrylate esters; an ethylene/α-olefin or ethylene/α-olefin/diene copolymer grafted with an unsaturated carboxylic anhydride; a copolymer of ethylene, 2-isocyanatoethyl (meth)acrylate, and optionally one or more (meth)acrylate esters; and a copolymer of ethylene and acrylic acid reacted with a Na, Li, or Mn compound to form the corresponding ionomer.

The thermoplastic composition of the present invention may also comprise other additives commonly used in the art, such other heat stabilizers or antioxidants referred to as "co-stabilizers", antistatic agents, blowing agents, and colorant and pigments. In one embodiment 0.1 to 3.0 weight percent of one or more colorants is present, wherein the weight percent colorant includes the weight of the carrier accompanying the colorant. In one embodiment the colorant is selected from the group of carbon black and nigrosine black pigment.

The thermoplastic polyamide of the present invention may further comprise halogenated flame retardants, preferably in the range of 2 to 30 weight percent based on the total weight of the polyamide composition. A preferred halogenated flame retardant is brominated polystyrene.

The thermoplastic polyamide composition consists of less than 15 weight percent, preferably less than 10 weight percent magnesium hydroxide; and less than 0.20 weight percent, preferably less than 0.10 weight percent, of zinc compounds selected from the group consisting of zinc borate and zinc oxide.

Co-stabilizers include copper stabilizers, secondary aryl amines, hindered amine light stabilizers (HALS), hindered phenols, and mixtures thereof, that are disclosed in US patent application publication 2010/0029819, Palmer et al.

Molded parts comprising the thermoplastic polyamide composition herein disclosed exhibit no whitening or only low levels of whitening upon ageing. For instance, molded parts, aged in an environmental chamber under conditions of 85% relative humidity and 85 °C for one to seven days show significantly less whitening than similar compositions absence the anti-whitening agents and lubricant. Although not met to be limiting the scope of the invention disclosed herein, whitening is thought to be related to the migration, (often referred to as blooming) and crystallization of materials onto the surface of test plaques under aging conditions. Whitening can be evaluated by visual observation and also by measuring the L value with a spectrophotometer. The L value is a common measure of whiteness on the CIELAB colorspace. Low L values correspond to darker plaques and higher L values correspond to lighter plaques. Therefore a positive ΔL means a change from darker to lighter. In one embodiment 5 in x 3 in x 3 mm test plaques prepared from the thermoplastic polyamide composition, when exposed at a test temperature at 85 °C and relative humidity of 85 %, for a test period of 7 days in an atmosphere of air, had a ΔL value, versus an untreated control of identical composition, determined at 110 ° reflection with a multi-angle spectrophotometer, of at least 25 percent less than that of the same composition absent the anti-whitening agent.

Herein the thermoplastic composition is a mixture by melt-blending, in which all polymeric ingredients are adequately mixed, and all non-polymeric ingredients are adequately dispersed in a polymer matrix. Any melt-blending method may be used for mixing polymeric ingredients and non-polymeric ingredients of the present invention. For example, polymeric ingredients and non-polymeric ingredients may be fed into a melt mixer, such as single screw extruder or twin screw extruder, agitator, single screw or twin screw kneader, or Banbury mixer, and the addition step may be addition of all ingredients at once or gradual addition in batches. When the polymeric ingredient and non-polymeric ingredient are gradually added in batches, a part of the polymeric ingredients and/or non-polymeric ingredients is first added, and then is melt-mixed with the remaining polymeric ingredients and non-polymeric ingredients that are subsequently added, until an adequately mixed composition is obtained. If a reinforcing filler presents a long physical shape (for example, a long glass fiber), drawing extrusion molding may be used to prepare a reinforced composition.

In another aspect, the present invention relates to a method for manufacturing an article by shaping the thermoplastic polyamide composition disclosed herein. Examples of articles are films or laminates, automotive parts or engine parts or electrical/electronics parts. By "shaping", it is meant any shaping technique, such as for example extrusion, injection molding, thermoform molding, compression molding or blow molding. Preferably, the article is shaped by injection molding or blow molding.

The molded or extruded thermoplastic articles disclosed herein may have application in many vehicular components that meet one or more of the following requirements: high impact requirements; significant weight reduction (over conventional metals, for instance); resistance to high temperature; resistance to oil environment; resistance to chemical agents such as coolants; and noise reduction allowing more compact and integrated design. Specific molded or extruded thermoplastic articles are selected from the group consisting of charge air coolers (CAC); cylinder head covers (CHC); oil pans; engine cooling systems, including thermostat and heater housings and coolant pumps; exhaust systems including mufflers and housings for catalytic converters; air intake manifolds (AIM); and timing chain belt front covers. As an illustrative example of desired mechanical resistance against long-term high temperature exposure, a charge air cooler can be mentioned. A charge air cooler is a part of the radiator of a vehicle that improves engine combustion efficiency. Charge air coolers reduce the charge air temperature and increase the density of the air after compression in the turbocharger thus allowing more air to enter into the cylinders to improve engine efficiency. Since the temperature of the incoming air can be more than 200°C when it enters the charge air cooler, it is required that this part be made out of a composition maintaining good mechanical properties under high temperatures for an extended period of time. Also it is very desirable to have a shaped article that exhibits no whitening or very little whitening upon aging.

The present invention is further illustrated by the following examples. It should be understood that the following examples are for illustration purposes only, and are not used to limit the present invention thereto.

### Methods

### Compounding Method A

Examples and Comparative Examples listed in Tables 2-8 and 11 were prepared by melt blending the ingredients listed in the Tables in a 30 mm twin screw extruder (ZSK 30 by Coperion) operating at about 280 °C for Polyamide B and PA66 compositions and 310°C barrel setting for Polyamide A (PA 6T/66 55:45) compositions, using a screw speed of about 300 rpm, a throughput of 13.6 kg/hour and a melt temperature measured by hand of about 320 - 355°C for the all compositions. The glass fibers were added to the melt through a screw side feeder. Ingredient quantities shown in the Tables are given in weight percent on the basis of the total weight of the thermoplastic composition.

The compounded mixture was extruded in the form of laces or strands, cooled in a water bath, chopped into granules and placed into sealed aluminum lined bags in order to prevent moisture pick up.

### Compounding Method B

Examples and Comparative examples listed in Tables 9 and 12 were prepared by melt blending the ingredients listed in the Tables in a 40 mm twin screw extruder (Berstorff ZE40) operating at barrel settings of about 285°C using a screw speed of about 200 rpm, a throughput of 125 kg/hour and a melt temperature measured by hand of about 310°C for all compositions. The glass fibers were added to the melt through a screw side feeder. Liquid plasticizer (Plasthall 809 and Uniplex 214) was added through a liquid injection pump to the final barrel section. Ingredient quantities shown in the Tables are given in weight percent on the basis of the total weight of the thermoplastic composition.

The compounded mixture was extruded in the form of laces or strands, cooled in a water bath, chopped into granules and placed into sealed aluminum lined bags in order to prevent moisture pick up. The cooling and cutting conditions were adjusted to ensure that the materials were kept below 0.15 wt % of moisture level.

### Compounding Method C

Examples and comparative examples listed in Table 10 were prepared by melt blending the ingredients listed in the Table in a 58 mm twin screw extruder operating at barrel settings of about 260°C using a screw speed of about 300 rpm, a throughput of 600 lbs/hour and a melt temperature of about 315°C for all compositions. The glass fibers were added to the melt through a screw side feeder. Liquid plasticizer (Plasthall 809) was added through a liquid injection pump to the final barrel section. Ingredient quantities shown in the Table are given in weight percent on the basis of the total weight of the thermoplastic composition.

The compounded mixture was extruded in the form of laces or strands, cooled in a water bath, chopped into granules and placed into sealed aluminum lined bags in order to prevent moisture pick up. The cooling and cutting conditions were adjusted to ensure that the materials were kept below 0.15 wt % of moisture level.

### Compounding Method D

Examples and comparative examples listed in Table 13 were prepared by melt blending the ingredients listed in the Table in a 58 mm twin screw extruder (ZSK58 by Coperion) operating at barrel settings of about 270°C using a screw speed of about 300 rpm, a throughput of 275 kg/hour and a melt temperature of about 315°C for all compositions. The glass fibers were added to the melt through a screw side feeder. Liquid plasticizer (Plasthall 809) was added through a liquid injection pump to a spacer plate between the final two barrel sections. Ingredient quantities shown in the Table are given in weight percent on the basis of the total weight of the thermoplastic composition.

The compounded mixture was extruded in the form of laces or strands, cooled in a water bath, chopped into granules and placed into sealed polyethylene lined boxes in order to prevent moisture pick up. The cooling and cutting conditions were adjusted to ensure that the materials were kept below 0.15 wt % of moisture level.

### Mechanical Tensile Properties

Mechanical tensile properties, i.e. E-modulus, stress at break (Tensile strength) and strain at break (elongation at break) were measured according to ISO 527-2/1 BA. Measurements were made on 2 mm thick injection molded ISO tensile bars at a testing speed of 5 mm/min. Mold temperature for PA 6T/DT test specimens was 145-150 °C; mold temperature for PA 6T/66 test specimens was 90 - 100 °C; and melt temperature was 325 - 330 °C for both resins.

### Air Oven Ageing (AOA)

The test specimens (2 mm thick tensile bars) were heat aged in a recirculating air ovens (Heraeus type UT6060) according to the procedure detailed in ISO 2578. At various heat aging times, the test specimens were removed from the oven, allowed to cool to room temperature and sealed into aluminum lined bags until ready for testing. The tensile mechanical properties were then measured according to ISO 527 using a Zwick tensile instrument. The average values obtained from 5 specimens are given in the Tables.

Retention of tensile strength (TS) and elongation at break (EL) corresponds to the percentage of the tensile strength and elongation at break after heat aging for 500 or 1000 hours in comparison with the value of specimens non-heat-aged control specimens considered as being 100%.

### Whitening Determination Method

Two 5 in (12.7 cm) x 3 in (7.62 cm) X 3 mm plaques were treated by placing in an environmental chamber under conditions of 85% relative humidity and 85 °C. After one day one plaque was removed from the chamber and visually inspected. The L value, determined at 110 ° reflection was measured with a ChromaVision MA100 Multi-Angle Spectrophotometer (manufactured by X-Rite, Incorporated, Grandville, Michigan). L is a common measure of whiteness on the CIELAB colorspace. The L value was measured at 4 places on the plaque, both front and back and the L values averaged. A determination of L also was performed on an untreated plaque. A ΔL value was determined by subtracting the average of the four L measurements of the untreated plaque from the average of the four measurements from the treated plaque. After 7 days, the second plaque was removed from the chamber and the L value and ΔL value determined.
Low L values correspond to darker plaques and higher L values correspond to lighter plaques. Therefore a positive ΔL means a change from darker to lighter.

A survey found that, by visual observation, those of ordinary skill in the art could identify three levels of whitening, listed in Table 1, corresponding to the ΔL values determined by spectroscopic measurements means. Thus, using this relationship in some examples, visual observation was used to evaluate whitening where the L values could not be conveniently measured. For Examples and comparative examples listed In Table 10 the visual observation method was used on tensile bars rather than 5 in (12.7 cm) x 3 in (7.62 cm) plaques.

**Table 1 - Characterization of Whitening**

| | |
|---|---|
| Visual observation | ΔL (110°) |
| none | ΔL < 5 |
| slight | 5 < ΔL < 15 |
| moderate | 15 < ΔL < 25 |
| severe | ΔL > 25 |

### Materials

Polyamide A refers to PA 6T/66, a Zytel® HTN502HNC010 copolyamide, made from terephthalic acid, adipic acid, and hexamethylenediamine; wherein the two acids are used in a 55:45 molar ratio; having a melting point of about 310 °C and an inherent viscosity (IV), according to ASTM D2857 method, typically about 1.07, available from E.I. DuPont de Nemours and Company, Wilmington, Delaware, USA.

Polyamide B refers to PA66/6T (75/25 molar ratio repeat units) with amine ends approximately 80 meq/kg, having a typical relative viscosity (RV) of 41, according to ASTM D-789 method, and a typical melt point of 268 °C, that was provided according to the following procedure:
Polyamide 66 salt solution (3928 lbs. of a 51.7 percent by weight with a pH of 8.1) and 2926 Ibs of a 25.2% by weight of polyamide 6T salt solution with a pH of 7.6 were charged into an autoclave with 100 g of a conventional antifoam agent, 20g of sodium hypophosphite, 220g of sodium bicarbonate, 2476 g of 80% HMD solution in water, and 1584 g of glacial acetic. The solution was then heated while the pressure was allowed to rise to 265 psia at which point, steam was vented to maintain the pressure at 265 psia and heating was continued until the temperature of the batch reached 250°C. The pressure was then reduced slowly to 6 psia, while the batch temperature was allowed to further rise to 280-290 °C. The pressure was then held at 6 psia and the temperature was held at 280-290 °C for 20 minutes. Finally, the polymer melt was extruded into strands, cooled, and cut into pellets.

PA 66 refers to an aliphatic polyamide made of 1,6-hexanedioic acid and 1,6-hexamethylenediamine having an relative viscosity in the range of 46 - 51 and a melting point of about 263 °C, commercially available from E.I. DuPont de Nemours and Company, Wilmington, Delaware, USA under the trademark Zytel^{®} 101NC010.

PA 6-1 refers to Ultramid® B27 polyamide 6 resin (polycaprolactam) available from BASF Corporation, Florham Park, NJ, 07932.

PA6 -2 refers to Durethan B29 poly(e-caprolactam) available from Lanxess Germany.

Glass fiber B refers to CPIC 301 HP chopped glass fiber available from Chongqing Polycomp International Corp., Chongqing, China.

Glass fiber C refers to PPG 3610 chopped glass fiber available from PPG Industries, Pittsburgh, PA.

Glass fibers D refer NEG 262H glass fibers manufactured by Nippon Electric Glass, Osaka, Japan.

Black Pigment A refers to ZYTEL® FE3786 BK031C black concentrate, a 40 wt % nigrosine black pigment concentrate in a PA66 carrier.

Black Pigment B refers ZYTEL ® FE3779 BK031C black concentrate, a 25 wt % carbon black in a PA6 carrier.

Cu heat stabilizer refers to a mixture of 7 parts of potassium iodide and 1 part of copper iodide in 0.5 part of aluminum stearate wax binder.

Plasthall 809 is a polyethylene glycol 400 di-2-ethylhexoate available from C.P. Hall Company, Chicago, Illinois 60606.

Loxiol HOB 7119 lubricant is a pentaerythritol tetrastearate manufactured by Cognis, Dusseldorf, Germany.

PEG 6000J is a poly(ethylene glycol) manufactured by Lion Corporation, Japan.

PEG refers to a polyethylene glycol of MW about 18,500 from Polysciences Inc. Warrington, PA,18976, USA.

Uniplex 214 plasticizer refers to N-butylbenzenesulfonamide available from Unitex Chemical Corp., Greensboro, NC.

Kraton D1161 PT is a styrene-isoprene-styrene block copolymer (SIS), available from Kraton Performance Polymers; Houston, TX, USA.

Kraton D1116AT is a styrene-butadiene-styrene block copolymer (SBS), available from Kraton Performance Polymers, Houston, TX, USA.

Kemamide E180 lubricant is N-stearylerucamide, CAS No. [10094-45-8], available from Chemtura Corp., Philadelphia, PA.

Saytex 7010G is brominated polystyrene used as a flame retardant manufactured by Albermarle.

Thermoguard S PE80/20 is antimony oxide [CAS 1309-64-4] masterbatch in polyethylene, manufactured by Chemtura.

### Examples

Comparative Example C1, having no DPE, exhibits no whitening.

Comparative Examples C3 and C4, having DPE but absent an anti-whitening agent, exhibits severe whitening.

Comparative Example C2, having DPE and an anti-whitening agent, but absent a lubricant shows moderate whitening.

The Examples, comprising a polyhydric alcohol, anti-whitening agent, and lubricant, show significantly less whitening than the Comparative Examples.

**Table 2**

| Example | C1 | C2 | C3 | C4 |
|---|---|---|---|---|
| Polyamide B (66/6T) | 63.27 | 60.77 | 61.67 | 60.17 |
| Glass Fiber B | 35.00 | 35.00 | 35.00 | 35.00 |
| Kemamide E180 | | | 0.10 | 0.10 |
| Cu Heat Stabilizer | 0.30 | 0.30 | 0.30 | 0.30 |
| Dipentaerythritol | | 1.50 | 1.50 | 3.00 |
| Plasthall 809 | | 1.00 | | |
| Black Pigment A | 0.60 | 0.60 | 0.60 | 0.60 |
| Black Piqment B | 0.83 | 0.83 | 0.83 | 0.83 |

| Whitening Properties | | | | |
|---|---|---|---|---|
| ΔL (110°), 24 h | 1.2 | 4.4 | 12.7 | 23.6 |
| Visual observation, 24 h | none | none | slight | moderate |
| ΔL (110°), 7 days | 1.9 | 22.2 | 38.6 | 52.8 |
| Visual observation, 7 days | none | moderate | severe | severe |

| Tensile Properties. Dry-As-Molded | | | | |
|---|---|---|---|---|
| Tensile Strength [MPa] | 180 | 185 | 205 | 207 |
| Elongation at Break [%] | 5.4 | 5.8 | 3.6 | 3.8 |

| Tensile Properties, 500 hrs at 230 °C | | | | |
|---|---|---|---|---|
| Tensile Strength [MPa] | 56 | 161 | 155 | 158 |
| Tensile Strength Retention [%] | 31% | 87% | 76% | 77% |
| Elongation at Break [%] | 1.3 | 4.0 | 2.1 | 2.0 |
| Elongation Retention [%] | 25% | 69% | 57% | 53% |

| Tensile Properties, 1000 hrs at 230 °C | | | | |
|---|---|---|---|---|
| Tensile Strength [MPa] | 4 | 121 | 107 | 61 |
| Tensile Strength Retention [%] | 2% | 66% | 52% | 30% |
| Elongation at Break | 0.4 | 4.4 | 1.9 | 1.1 |
| Elongation Retention [%] | 7% | 76% | 51% | 30% |

**Table 3**

| Example | C1 | C6 | C7 | C8 | 1 | C9 |
|---|---|---|---|---|---|---|
| Polyamide B (66/6T) | 63.27 | 63.17 | 61.77 | 60.77 | 60.67 | 60.17 |
| Glass Fiber B | 35.00 | 35.00 | 35.00 | 35.00 | 35.00 | 35.00 |
| Kemamide E180 | | 0.10 | | | 0.10 | 0.10 |
| Cu Heat Stabilizer | 0.30 | 0.30 | 0.30 | 0.30 | 0.30 | 0.30 |
| Pentaerythritol | | | 0.75 | 0.75 | 0.75 | 1.50 |
| Dipentaerythritol | | | 0.75 | 0.75 | 0.75 | 1.50 |
| Plasthall 809 | | | | 1.00 | 1.00 | |
| Black Pigment A | 0.60 | 0.60 | 0.60 | 0.60 | 0.60 | 0.60 |
| Black Pigment B | 0.83 | 0.83 | 0.83 | 0.83 | 0.83 | 0.83 |

| Whitening Properties | | | | | | |
|---|---|---|---|---|---|---|
| ΔL (110°). 24 h | 1.2 | 1.8 | 9.0 | 6.5 | 9.0 | 40.3 |
| Visual observation, 24 h | none | none | slight | slight | slight | severe |
| ΔL (110°). 7 days | 1.9 | 1.9 | 11.6 | 15.3 | 11.0 | 46.9 |
| Visual observation, 7 days | none | none | slight | moderate | slight | severe |

| Tensile Properties, Dry-As-Molded | | | | | | |
|---|---|---|---|---|---|---|
| Tensile Strength [MPa] | 180 | 190 | 188 | 184 | 184 | 187 |
| Elongation at Break [%] | 5.4 | 6.6 | 5.6 | 5.8 | 6.8 | 6.2 |

| Tensile Properties, 500 h at 230 °C | | | | | | |
|---|---|---|---|---|---|---|
| Tensile Strength [MPa] | 56 | 52 | 100 | 122 | 98 | 122 |
| Tensile Strength Retention [%] | 31% | 28% | 53% | 66% | 53% | 65% |
| Elongation at Break [%] | 1.3 | 1.8 | 2.8 | 3.0 | 3.2 | 3.4 |
| Elongation Retention [%] | 25% | 27% | 50% | 5.2% | 47% | 55% |

| Tensile Properties, 1000 h at 230 °C | | | | | | |
|---|---|---|---|---|---|---|
| Tensile Strength [MPa] | 4 | 1 | 5 | 10 | 1 | 5 |
| Tensile Strength Retention [%] | 2% | 1% | 2% | 6% | 1% | 3% |
| Elongation at Break [%] | 0.4 | 0.2 | 0.3 | 0.3 | 0.4 | 0.3 |
| Elongation Retention [%] | 7% | 3% | 5% | 5% | 6% | 5% |

**Table 4**

| Example | 2 | 3 | 4 | 5 | 6 | 7 | 8 | 9 | 10 |
|---|---|---|---|---|---|---|---|---|---|
| Polyamide B (66/6T) | 60.67 | 60.92 | 61.17 | 60.67 | 60.92 | 61.17 | 60.67 | 60.92 | 61.17 |
| Glass Fiber B | 35.00 | 35.00 | 35.00 | 35.00 | 35.00 | 35.00 | 35.00 | 35.00 | 35.00 |
| Kemamide E180 | 0.10 | 0.10 | 0.10 | 0.10 | 0.10 | 0.10 | 0.10 | 0.10 | 0.10 |
| Cu Heat Stabilizer | 0.30 | 0.30 | 0.30 | 0.30 | 0.30 | 0.30 | 0.30 | 0.30 | 0.30 |
| Pentaerythritol | 0.75 | 0.75 | 0.75 | 1.00 | 1.00 | 1.00 | 0.50 | 0.50 | 0.50 |
| Dipentaerythritol | 0.75 | 0.75 | 0.75 | 0.50 | 0.50 | 0.50 | 1.00 | 1.00 | 1.00 |
| Plasthall 809 | 1.00 | 0.75 | 0.50 | 1.00 | 0.75 | 0.50 | 1.00 | 0.75 | 0.50 |
| Black Piqment A | 0.60 | 0.60 | 0.60 | 0.60 | 0.60 | 0.60 | 0.60 | 0.60 | 0.60 |
| Black Piqment B | 0.83 | 0.83 | 0.83 | 0.83 | 0.83 | 0.83 | 0.83 | 0.83 | 0.83 |

| Whitening Properties | | | | | | | | | |
|---|---|---|---|---|---|---|---|---|---|
| ΔL (110°), 24 h | 9.3 | 9.6 | 12.6 | 7.4 | 8.0 | 9.3 | 8.6 | 8.2 | 11.6 |
| Visual observation, *24 h* | slight | slight | slight | slight | slight | slight | slight | slight | slight |
| ΔL (110°), 7 days | 12.3 | 11.4 | 20.3 | 4.4 | 13.2 | 11.3 | 11.9 | 6.3 | 10.6 |
| Visual observation, 7 *days* | slight | slight | mode rate | none | slight | slight | slight | slight | slight |

| Tensile Properties, Dry-As-Molded | | | | | | | | | |
|---|---|---|---|---|---|---|---|---|---|
| Tensile Strength [MPa] | 188 | 187 | 189 | 182 | 188 | 187 | 185 | 187 | 190 |
| Elongation at Break [%] | 6.7 | 6.7 | 6.6 | 6.9 | 6.7 | 6.7 | 6.8 | 6.9 | 6.5 |

| Tensile Properties, 500 h at 230 °C | | | | | | | | | |
|---|---|---|---|---|---|---|---|---|---|
| Tensile Strength [MPa] | 84 | 118 | 105 | 101 | 102 | 107 | 122 | 119 | 124 |
| Tensile Strength Retention [%] | 45% | 63% | 56% | 55% | 54% | 57% | 66% | 64% | 66% |
| Elongation at Break [%] | 3.0 | 4.0 | 3.8 | 3.5 | 3.2 | 3.4 | 3.9 | 4.3 | 4.1 |
| Elongation Retention [%] | 44% | 58% | 57% | 51% | 50% | 51% | 56% | 63% | 60% |

| Tensile Properties, 1000 h at 230 °C | | | | | | | | | |
|---|---|---|---|---|---|---|---|---|---|
| Tensile Strength [MPa] | 6 | 6 | 5 | 4 | 4 | 7 | 8 | 9 | 9 |
| Tensile Strength Retention [%] | 3% | 3% | 3% | 2% | 2% | 4% | 4% | 5% | 5% |
| Elongation at Break [%] | 0.2 | 0.3 | 0.3 | 0.3 | 0.3 | 0.3 | 0.2 | 0.3 | 0.3 |
| Elongation Retention [%] | 3% | 4% | 4% | 4% | 4% | 4% | 3% | 4% | 4% |

**Table 5**

| Example | C6 | C11 | C12 | C13 | 11 | 12 | 13 |
|---|---|---|---|---|---|---|---|
| Polyamide B (66/6T) | 63.17 | 61.77 | 60.77 | 61.67 | 60.67 | 59.17 | 44.67 |
| Glass Fiber B | 35.00 | 35.00 | 35.00 | 35.00 | 35.00 | 35.00 | 50.00 |
| Kemamide E180 | 0.10 | | | 0.10 | 0.10 | 0.10 | 0.10 |
| Cu Heat Stabilizer | 0.30 | 0.30 | 0.30 | 0.30 | 0.30 | 0.30 | 0.30 |
| Dipentaerythritol | | 0.75 | 0.75 | 0.75 | 0.75 | 1.50 | 1.25 |
| Tripentaerythritol | | 0.75 | 0.75 | 0.75 | 0.75 | 1.50 | 1.25 |
| Plasthall 809 | | | 1.00 | | 1.00 | 1.00 | 1.00 |
| Black Pigment A | 0.60 | 0.60 | 0.60 | 0.60 | 0.60 | 0.60 | 0.60 |
| Black Pigment B | 0.83 | 0.83 | 0.83 | 0.83 | 0.83 | 0.83 | 0.83 |

| Whitening,Properties | | | | | | | |
|---|---|---|---|---|---|---|---|
| ΔL (110°), 24 h | 1.8 | 12.0 | 13.2 | 21.4 | 1.0 | 4.0 | 11.0 |
| Visual observation, 24 h | none | slight | slight | moderate | none | none | slight |
| ΔL (110°). 7 days | 1.9 | 15.0 | 13.8 | 26.1 | 1.0 | 6.7 | 13.9 |
| Visual observation, 7 days | none | slight | slight | severe | none | slight | slight |

| Tensile Properties, Dry-As-Molded | | | | | | | |
|---|---|---|---|---|---|---|---|
| Tensile Strength [MPa] | 190 | 190 | 182 | 187 | 181 | 181 | 182 |
| Elongation at Break [%] | 6.6 | 5.6 | 5.8 | 6.4 | 6.6 | 6.5 | 6.5 |

| Tensile Properties, 500 h at 230 °C | | | | | | | |
|---|---|---|---|---|---|---|---|
| Tensile Strength [MPa] | 52 | 115 | 135 | 114 | 120 | 157 | 182 |
| Tensile Strength Retention [%] | 28% | 61% | 74% | 61% | 66% | 87% | 100% |
| Elongation at Break [%] | 1.8 | 3.0 | 3.4 | 3.0 | 3.2 | 4.0 | 4.4 |
| Elongation Retention [%] | 27% | 53% | 58% | 47% | 49% | 60% | 68% |

| Tensile Properties, 1000 h at 230 °C | | | | | | | |
|---|---|---|---|---|---|---|---|
| Tensile Strength [MPa] | 1 | 7 | 20 | 7 | 11 | 38 | 74 |
| Tensile Strength Retention [%] | 1% | 4% | 11% | 4% | 6% | 21% | 41% |
| Elongation at Break [%] | 0.2 | 0.4 | 0.6 | 0.2 | 0.3 | 0.8 | 1.6 |
| Elongation Retention [%] | 3% | 7% | 11% | 3% | 4% | 13% | 25% |

**Table 6**

| Example | C14 | C15 | 14 |
|---|---|---|---|
| Polyamide A (6T/66) | 63.67 | 53.67 | 52.67 |
| Glass Fiber B | 35.00 | 35.00 | 35.00 |
| Licowax OP | 0.25 | 0.25 | 0.25 |
| Cu Heat Stabilizer | 0.40 | 0.40 | 0.40 |
| TRX-301 | | 2.50 | 2.50 |
| PA66 | | 5.00 | 5.00 |
| Dipentaerythritol | | 2.50 | 1.25 |
| Pentaerythritol | | | 1.25 |
| Plasthall 809 | | | 1.00 |
| Black Pigment A | 0.68 | 0.68 | 0.68 |
| Whitening Properties | | | |
| ΔL (110°), 24 h | -1.6 | 4.1 | 4.4 |
| Visual observation, 24 h | none | none | none |
| ΔL (110°), 7 days | 0.9 | 23.9 | 7.3 |
| Visual observation. 7 days | none | moderate | slight |
| Tensile Properties, Dry-As-Molded | | | |
| Tensile Strength [MPa] | 208 | 202 | 199 |
| Elongation at Break [%] | 5.2 | 5.4 | 5.6 |
| Tensile Properties, 500 hrs at 230 °C | | | |
| Tensile Strength [MPa] | 73 | 190 | 167 |
| Tensile Strength Retention [%] | 35% | 94% | 84% |
| Elongation at Break [%] | 1.9 | 4.4 | 4.0 |
| Elongation Retention [%] | 37% | 81% | 71% |
| Tensile Properties, 1000 hrs at 230 °C | | | |
| Tensile Strength [MPa] | 17 | 133 | 120 |
| Tensile Strength Retention [%] | 8% | 66% | 60% |
| Elongation at Break [%] | 0.4 | 2.6 | 2.7 |
| Elongation Retention [%] | 7% | 49% | 48% |

**Table 7**

| Example | C16 | C17 | C18 | C19 | 15 | C20 | C21 |
|---|---|---|---|---|---|---|---|
| Polyamide B (66/6T) | 61.67 | 61.67 | 56.45 | 60.17 | 59.17 | 45.35 | 42.30 |
| Glass Fiber B | 35.00 | 35.00 | 35.00 | 35.00 | 35.00 | 50.00 | 45.00 |
| Kemamide E180 | 0.10 | 0.10 | 0.075 | 0.10 | 0.10 | 0.125 | 0.15 |
| Aluminum Stearate | | | 0.075 | | | 0.125 | 0.15 |
| Cu Heat Stabilizer | 0.30 | 0.30 | 0.30 | 0.30 | 0.30 | 0.30 | 0.30 |
| TRX-301 | | | | | | | 2.50 |
| PA6-1 | | | 5.00 | | | | 5.00 |
| Tripentaerythritol | 1.50 | 1.50 | 1.50 | 3.00 | 3.00 | 2.50 | 3.00 |
| Plasthall 809 | | | | | 1.00 | | |
| Black Pigment A | 0.60 | 0.60 | 0.60 | 0.60 | 0.60 | 0.60 | 0.60 |
| Black Pigment B | 0.83 | 0.83 | 1.00 | 0.83 | 0.83 | 1.00 | 1.00 |

| Whitening Properties | | | | | | | |
|---|---|---|---|---|---|---|---|
| ΔL (110°), 24 h | 17.4 | 22.6 | 16.8 | 8.0 | 5.5 | 12.1 | 15.0 |
| Visual observation, 24 h | moderate | moderate | moderate | slight | none | slight | moderate |
| ΔL (110°),7 days | 18.0 | 23.7 | 26.5 | 10.2 | 4.5 | 21.0 | 20.7 |
| Visual observation, 7 days | moderate | moderate | severe | slight | none | moderate | moderate |

| Tensile Properties, Dry-As-Molded | | | | | | | |
|---|---|---|---|---|---|---|---|
| Tensile Strength [MPa] | 187 | 191 | 204 | 180 | 186 | 243 | 214 |
| Elongation at Break [%] | 6.4 | 6.1 | 6.0 | 6.5 | 6.6 | 5.4 | 5.7 |

| Tensile Properties, 500 h at 230 °C | | | | | | | |
|---|---|---|---|---|---|---|---|
| Tensile Strength [MPa] | 125 | 130 | 185 | 159 | 197 | 203 | 222 |
| Tensile Strength Retention [%] | 67% | 68% | 91% | 90% | 106% | 84% | 104% |
| Elongation at Break [%] | 3.3 | 3.6 | 4.3 | 4.0 | 4.7 | 3.9 | 4.8 |
| Elongation Retention [%] | 52% | 58% | 71% | 62% | 72% | 72% | 84% |

| Tensile Properties, 1000 h at 230 °C | | | | | | | |
|---|---|---|---|---|---|---|---|
| Tensile Strength [MPa] | 8 | 11 | 121 | 61 | 102 | 92 | 150 |
| Tensile Strength Retention [%] | 4% | 6% | 59% | 34% | 55% | 38% | 70% |
| Elongation at Break [%] | 0.3 | 0.4 | 3.0 | 1.3 | 2.3 | 2.4 | 3.0 |
| Elongation Retention [%] | 4% | 6% | 50% | 20% | 36% | 45% | *53%* |

**Table 8**

| Example | 16 | C22 | C23 | C24 | 17 | 18 | 19 | C25 |
|---|---|---|---|---|---|---|---|---|
| Polyamide B (66/6T) | 42.40 | 42.40 | 42.40 | 55.50 | 54.50 | 54.00 | 43.15 | 44.65 |
| Glass Fiber B | 45.00 | 45.00 | 45.00 | 35.00 | 35.00 | 35.00 | 50.00 | 50.00 |
| Kemamide E180 | 0.20 | 0.20 | 0.20 | 0.10 | 0.10 | 0.10 | 0.25 | 0.25 |
| Cu Heat Stabilizer | 0.30 | 0.30 | 0.30 | 0.30 | 0.30 | 0.30 | | |
| TRX-301 | 0.50 | 1.00 | 1.50 | | | 0.50 | 0.50 | |
| Kraton D1161 PT | 2.00 | 1.50 | 1.00 | 1.00 | 1.00 | 2.00 | 2.00 | 1.00 |
| PA6-1 | 5.00 | 5.00 | 5.00 | 5.00 | 5.00 | 5.00 | | |
| Dipentaerythritol | 3.00 | 3.00 | 3.00 | 1.50 | 1.50 | 1.50 | 2.50 | 2.50 |
| Plasthall 809 | | | | | 1.00 | | | |
| Black Piqment A | 0.60 | 0.60 | 0.60 | 0.60 | 0.60 | 0.60 | 0.60 | 0.60 |
| Black Pigment B | 1.00 | 1.00 | 1.00 | 1.00 | 1.00 | 1.00 | 1.00 | 1.00 |

| Whiteninq Properties | | | | | | | | |
|---|---|---|---|---|---|---|---|---|
| ΔL (110°), 24 h | 8.1 | 10.0 | 8.5 | 7.9 | 3.4 | 2.3 | 5.2 | 10.1 |
| visual observation, 24 h | slight | slight | slight | slight | none | none | none | slight |
| ΔL (110°), 7 days | 17.1 | 22.6 | 39.8 | 29.5 | 1.5 | 13.9 | 13.1 | 21.9 |
| visual observation, 7 days | moderate | moderate | severe | severe | none | slight | slight | moderate |

| Tensile Properties, Dry-As-Molded | | | | | | | | |
|---|---|---|---|---|---|---|---|---|
| Tensile Strength [MPa] | 220 | 220 | 216 | 203 | 190 | 193 | 228 | 238 |
| Elongation at Break [%] | 5.3 | 5.3 | 5.4 | 5.6 | 5.7 | 5.8 | 5.0 | 5.2 |

| Tensile Properties, 500 h at 230 °C | | | | | | | | |
|---|---|---|---|---|---|---|---|---|
| Tensile Strength [MPa] | 228 | 220 | 218 | 170 | 209 | 169 | 189 | 188 |
| Tensile Strength Retention [%] | 103% | 100% | 101% | 84% | 110% | 88% | 83% | 79% |
| Elongation at Break [%] | 4.5 | 4.3 | 4.2 | 3.5 | 4.8 | 3.6 | 3.3 | 3.4 |
| Elongation Retention [%] | 84% | 80% | 79% | 63% | 85% | 63% | 67% | 66% |

| Tensile Properties, 1000 h at 230 °C | | | | | | | | |
|---|---|---|---|---|---|---|---|---|
| Tensile Strength [MPa] | 77 | 55 | 174 | 54 | 186 | 41 | 173 | 145 |
| Tensile Strength Retention [%] | 35% | 25% | 80% | 27% | 98% | 21% | 76% | 61% |
| Elongation at Break [%] | 0.9 | 1.0 | 2.9 | 0.8 | 3.5 | 0.8 | 3.2 | 3.1 |
| Elongation Retention [%] | 16% | 18% | 54% | 14% | 61% | 13% | 63% | 59% |

**Table 9**

| Example | C26 | C27 | 20 |
|---|---|---|---|
| Polyamide B (66/6T) | 42.40 | 42.40 | 42.40 |
| Glass fiber C | 45.00 | 45.00 | 45.00 |
| PA6-2 | 5.00 | 5.00 | 5.00 |
| Dipentaerythritol | 3.00 | 3.00 | 3.00 |
| Black Pigment A | 0.60 | 0.60 | 0.60 |
| Black Pigment B | 1.00 | 1.00 | 1.00 |
| Cu Heat Stabilizer | 0.30 | 0.30 | 0.30 |
| Kemamide E180 | 0.20 | 0.20 | 0.20 |
| TRX-301 | 2.50 | 0.50 | 0.50 |
| Kraton D1116AT-SBS | | 2.00 | |
| Kraton D1161PT-SIS | | | 2.00 |
| Whitening Properties | | | |
| Visual observation, 24 h | Moderate | Moderate | None |
| visual observation, 7 days | Moderate | Moderate | slight |
| Tensile Properties, Dry-As-Molded | | | |
| Tensile Strength [MPa] | 211.7 | 212.5 | 209.5 |
| Elongation at Break [%] | 3.4 | 3.2 | 3.3 |

**Table 10**

| Example³ | C28 | C29 | 21 | 22 |
|---|---|---|---|---|
| PA6-1 | 62.15 | 61.30 | 60.55 | 59.55 |
| Glass Fiber B | 35.00 | 35.00 | 35.00 | 35.00 |
| Dipentaerythritol | 1.50 | 1.50 | 1.50 | 1.50 |
| Black Pigment A | 0.60 | 0.60 | 0.60 | 0.60 |
| Black Pigment B | 0.60 | 1.00 | 1.00 | 1.00 |
| Cu Heat Stabilizer | | 0.45 | 0.45 | 0.45 |
| Kemamide E180 | 0.075 | 0.075 | 0.075 | 0.075 |
| Aluminum distearate | 0.075 | 0.075 | 0.075 | 0.075 |
| Plasthall 809 | | | 0.75 | 0.75 |
| TRX-301 | | | | 0.20 |
| Kraton D1161PT-SIS | | | | 0.80 |
| Whitening Properties | | | | |
| Visual observation, 24 h | Moderate | Moderate | None | None |
| Visual observation, 7 days | Severe | Severe | slight | None |
| Tensile Properties, Dry-As-Molded | | | | |
| Tensile Strength [MPa] | 209 | 206 | 202 | 192 |
| Elongation at Break [%] | 4.2 | 3.6 | 3.6 | 3.7 |

| | | | | |
|---|---|---|---|---|
| ^{a} tensile bar samples were used for visual observation | | | | |

**Table 11**

| Example | C30 | C31 | C32 | 23 | 24 | 25 | 26 | 27 |
|---|---|---|---|---|---|---|---|---|
| Polyamide B (66/6T) | 61.57 | 60.07 | | | 60.57 | 58.57 | 60.57 | 58.57 |
| PA66 | | | 61.57 | 60.57 | | | | |
| Glass fiber D | 35.00 | 35.00 | 35.00 | 35.00 | 35.00 | 35.00 | 35.00 | 35.00 |
| Dipentaerythritol | 1.50 | 3.00 | 1.50 | 1.50 | 1.50 | 1.50 | 1.50 | 1.50 |
| Black Pigment A | 0.60 | 0.60 | 0.60 | 0.60 | 0.60 | 0.60 | 0.60 | 0.60 |
| Black Pigment B | 0.83 | 0.83 | 0.83 | 0.83 | 0.83 | 0.83 | 0.83 | 0.83 |
| Cu Heat Stabilizer | 0.40 | 0.40 | 0.40 | 0.40 | 0.40 | 0.40 | 0.40 | 0.40 |
| Kemamide E180 | 0.10 | 0.10 | 0.10 | 0.10 | 0.10 | 0.10 | 0.10 | 0.10 |
| Plasthall 809 | | | | 1.00 | 1.00 | 3.00 | | |
| PEG 6000J | | | | | | | 1.00 | 3.00 |
| Whitening Properties | | | | | | | | |
| ΔL (110°), 24 h | 10.6 | 23.2 | 21.9 | -2.7 | -2.1 | 0.0 | 5.8 | 2.6 |
| Visual observation, 24 h | slight | moderate | moderate | none | none | none | slight | none |
| ΔL (110°), 7 days | 44.1 | 46.9 | 51.3 | -5.3 | -3.5 | -4.7 | 6.4 | 2.4 |
| Visual observation, 7 days | *severe* | *severe* | *severe* | *none* | *none* | *none* | *slight* | *none* |
| Tensile Properties, Dry-As-Molded | | | | | | | | |
| Tensile Strength [MPa] | 203 | 202 | 208 | 189 | 189 | 177 | 194 | 188 |
| Elongation at Break [%] | 3.5 | 3.3 | 3.3 | 3.4 | 3.5 | 3.3 | 3.3 | 3.5 |

**Table 12**

| Example | C33 | C34 | C35 | C36 | 28 | 29 |
|---|---|---|---|---|---|---|
| PA66/6T | 57.80 | 56.75 | 56.30 | 55.55 | 55.55 | 55.55 |
| PA 6-1 | 5.00 | 5.00 | 5.00 | 5.00 | 5.00 | 5.00 |
| Glass Fiber C | 35.00 | 35.00 | 35.00 | 35.00 | 35.00 | 35.00 |
| DPE | | 1.50 | 1.50 | 1.50 | 1.50 | 1.50 |
| Black Pigment A | 0.60 | 0.60 | 0.60 | 0.60 | 0.60 | 0.60 |
| Black Pigment B | 1.00 | 1.00 | 1.00 | 1.00 | 1.00 | 1.00 |
| Cu Heat Stabilizer | 0.45 | | 0.45 | 0.45 | 0.45 | 0.45 |
| Kemamide E180 | 0.075 | 0.075 | 0.075 | 0.075 | 0.075 | 0.075 |
| Aluminum distearate | 0.075 | 0.075 | 0.075 | 0.075 | 0.075 | 0.075 |
| Uniplex 214 (NBBS) | | | | 0.75 | | |
| Plasthall 809 | | | | | 0.75 | |
| PEG | | | | | | 0.75 |
| Properties | | | | | | |
| Whitening, visual observation, 7 days | None | Moderate | Moderate | Slight | None | None |
| ΔL (110°), 24 h | 0 | 18 | 17 | 12 | 4 | 0 |
| Whitening, visual observation, 7 days | None | Severe | Severe | Moderate | Slight | None |
| ΔL (110°), 7 days | 0 | 27 | 29 | 20 | 6 | 1 |
| Tensile Properties, Dry-As-Molded | | | | | | |
| Tensile Strength [MPa] | 203.8 | 199.3 | 204.4 | 209.4 | 205.8 | 202.9 |
| Elongation at Break [%] | 4.2 | 4.2 | 4.1 | 4.1 | 4.0 | 4.3 |

**Table 13**

| Examples | C36 | 31 | 32 | C37 | 33 |
|---|---|---|---|---|---|
| PA 66/6T | 52.30 | 51.30 | 51.05 | 52.25 | 51.25 |
| PPG 3610 glass | 15.00 | 15.00 | 15.00 | 15.00 | 15.00 |
| Dipentaerythritol | 2.50 | 2.50 | 2.50 | 2.50 | 2.50 |
| Thermoguard S PE80/20 | 5.00 | 5.00 | 5.00 | 5.00 | 5.00 |
| Saytex 7010G | 23.00 | 23.00 | 23.00 | 23.00 | 23.00 |
| Kemamide E180 | 0.20 | 0.20 | 0.20 | 0.125 | 0.125 |
| Aluminum Distearate | | | | 0.125 | 0.125 |
| FE3786 (black concentrate) | 1.00 | 1.00 | 1.00 | 1.00 | 1.00 |
| FE3779 (black concentrate) | 1.00 | 1.00 | 1.00 | 1.00 | 1.00 |
| Plasthall 809 | | | 1.25 | | |
| PEG 20,000 | | 1.00 | | | 1.00 |
| Whitening Properties | | | | | |
| ΔL (110°), 24 h at 85 °C, 85% RH | 24.8 | 1.4 | 10.5 | 8.9 | 0.5 |
| Whitening Characterization, 24 h | moderate | none | slight | slight | none |
| ΔL (110°), 7 days at 85 °C, 85% RH | 43.8 | 1.9 | 16.5 | 45.1 | 2.5 |
| Whitening Characterization, 7 days | severe | none | moderate | severe | none |

## Claims

1. A thermoplastic polyamide composition comprising
a) a polyamide resin having a melting point and/or glass transition temperature;
b) 0.1 to 10 weight percent of one or more polyhydric alcohols having more than two hydroxyl groups selected from the group consisting of glycerol, trimethylolpropane, 2,3-di-(2'-hydroxyethyl)-cyclohexan-1-ol, hexane-1,2,6-triol, 1,1,1-tris-(hydroxymethyl)ethane, 3-(2'-hydroxyethoxy)-propane-1,2-diol, 3-(2'-hydroxypropoxy)-propane-1,2-diol, 2-(2'-hydroxyethoxy)-hexane-1,2-diol, 6-(2'-hydroxypropoxy)-hexane-1,2-diol, 1,1,1-tris-[(2'-hydroxyethoxy)-methyl]-ethane, 1,1,1-tris-[(2'-hydroxypropoxy)-methyl]-propane, 1,1,1-tris-(4'-hydroxyphenyl)-ethane, 1,1,1-tris-(hydroxyphenyl)-propane, 1,1,3-tris-(dihydroxy-3-methylphenyl)-propane, 1,1,4-tris-(dihydroxyphenyl)-butane, 1,1,5-tris-(hydroxyphenyl)-3-methylpentane, di-trimethylolpropane, pentaerythritol, dipentaerythritol, and tripentaerythritol, cyclodextrin, D-mannose, glucose, galactose, sucrose, fructose, xylose, arabinose, D-mannitol, D-sorbitol, D-or L-arabitol, xylitol, iditol, talitol, allitol, altritol, guilitol, erythritol, threitol, and D-gulonic-y-lactone;
c) 0.5 to 5 weight percent of one or more anti-whitening agents selected from the group consisting of poly(ethylene glycol), poly(ethylene glycol) diesters, poly(propylene glycol), poly(propylene glycol) diesters; and styrene-isoprene-styrene block copolymers; and mixtures of these;
d) 0.02 to 1 weight percent of a lubricant;
e) 10 to 60 weight percent of one or more reinforcement agents; and
f) 0 to 50 weight percent of a polymeric toughener comprising a reactive functional group and/or a metal salt of a carboxylic acid; with the provisos that the thermoplastic composition comprises less than 15 weight percent magnesium hydroxide and less than 0.20 weight percent zinc compounds selected from the group consisting of zinc borate and zinc oxide; and with the further proviso that at least 2 weight percent of styrene-isoprene-styrene block copolymers are present when no other anti-whitening agents selected from the group are present; and wherein all weight percentages are based on the total weight of the polyamide composition.

2. The thermoplastic polyamide composition of Claim 1 wherein the lubricant is selected from the group consisting of fatty acids, fatty acid esters, fatty acid amides, fatty acid metal salts, and oxidized polyethylene wax.

3. The thermoplastic polyamide composition of Claim 1 wherein the lubricant is present at 0.05 to 0.5 weight percent based on the weight of the total thermoplastic polyamide composition.

4. The thermoplastic polyamide composition of Claim 1 wherein the anti-whitening agent is selected from polyethylene glycol and polyethylene glycol diesters.

5. The thermoplastic polyamide composition of Claim 1 wherein the reinforcing agent is glass fiber.

6. The thermoplastic polyamide of Claim 1 wherein the composition further comprises: 0.1 to 3.0 weight percent of one or more colorants.

7. The thermoplastic polyamide of Claim 1 wherein the composition further comprises: 1 to 30 weight percent of one or more halogenated flame retardants.

8. The thermoplastic polyamide composition of Claim 1 wherein the polyamide resin is selected from the group consisting of Group (II) polyamides having a melting point of at least 210 °C, and comprising an aliphatic polyamide selected from the group consisting of poly(tetramethylene hexanediamide), poly(ε-caprolactam), poly(hexamethylene hexanediamide/ε-caprolactam),_poly(hexamethylene hexanediamide), poly(hexamethylene hexanediamide/hexamethylene decanediamide), poly(hexamethylene hexanediamidete.xamethylene dodecanediamide), poly(hexamethylene hexanediamideldecamethylene decanediamide), poly(hexamethylene decanediamide), poly(hexamethylene dodecanediamide), poly(hexamethylene tetradecanediamide), and poly(tetramethylene hexanediamide/2- methylpentamethylene hexanediamide); Group (III) polyamides having a melting point of at least 210 °C, and comprising
(aa) 20 to 35 mole percent semiaromatic repeat units derived from monomers selected from one or more of the group consisting of:
(i) aromatic dicarboxylic acids having 8 to 20 carbon atoms and aliphatic diamines having 4 to 20 carbon atoms; and
(bb) 65 to 80 mole percent aliphatic repeat units derived from monomers selected from one or more of the group consisting of:
an aliphatic dicarboxylic acid having 6 to 20 carbon atoms and said aliphatic diamine having 4 to 20 carbon atoms; and
(iii) a lactam and/or aminocarboxylic acid having 4 to 20 carbon atoms; and Group (IV) polyamides comprising:
(cc) 50 to 95 mole percent semiaromatic repeat units derived from monomers selected from one or more of the group consisting of:
(iv) aromatic dicarboxylic acids having 8 to 20 carbon atoms and aliphatic diamines having 4 to 20 carbon atoms; and
(gg) 5 to 50 mole percent aliphatic repeat units derived from monomers selected from one or more of the group consisting of:
(v) an aliphatic dicarboxylic acid having 6 to 20 carbon atoms and said aliphatic diamine having 4 to 20 carbon atoms; and a lactam and/or aminocarboxylic acid having 4 to 20 carbon atoms.

9. The thermoplastic polyamide composition of Claim 8 wherein the polyamide resin is selected from the group consisting of poly(ε-caprolactam), poly(hexamethylene hexanediamide), and poly(hexamethylene terephthalamide/hexamethylene hexanediamide).

10. The polyamide composition of Claim 1 wherein 5 in (12.7 cm) x 3 in (7.62 cm) X 2 mm test plaques prepared from said polyamide composition, when exposed at a test temperature at 85 °C and relative humidity of 85 %, for a test period of 7 days in an atmosphere of air, had a ΔL value, versus an untreated control of identical composition, determined at 110° reflection with a multi-angle spectrophotometer, of at least 25 percent less than that of the same composition absent the anti-whitening agent, wherein L is a measure of whiteness on the CIELAB colorspace.

11. A molded or extruded article made from the thermoplastic polyamide composition of Claim 1.

## Patentansprüche

1. Thermoplastische Polyamidzusammensetzung umfassend
a) ein Polyamidharz mit einem Schmelzpunkt und/oder einer Glasübergangstemperatur;
b) 0,1 bis 10 Gewichtsprozent eines oder mehrerer mehrwertigen Alkohole mit mehr als zwei Hydroxylgruppen, ausgewählt aus der Gruppe umfassend Glyzerin, Trimethylolpropan, 2,3-di-(2'-hydroxyethyl)-cyclohexan-1-ol, Hexan-1,2,6-triol, 1,1,1-Tris-(hydroxymethyl)-ethan, 3-(2'-hydroxyethoxy)-propan-1,2-diol, 3-(2'-hydroxypropoxy)-propan-1,2-diol, 2-(2'-hydroxyethoxy)-hexan-1,2-diol, 6-(2'-hydroxypropoxy) -Hexan-1,2-diol, 1,1,1-Tris-[(2'-hydroxyethoxy)-methyl)-ethan, 1, 1, 1-Tris-[(2'-hydroxypropoxy)-methyl]-propan, 1,1,1-Tris(4'-hydroxyphenyl)-ethan, 1,1,1-Tris-(hydroxyphenyl)-propan, 1,1,3-Tris-(dihydroxy-3-methylphenyl)-propan, 1,1,4-Tris-(Dihydroxyphenyl)-butan, 1,1,5-Tris-(hydroxyphenyl)-3-methylpentan, di-Trimethylolpropan, Pentaerythrit, Dipentaerythrit und Tripentaerythrit, Cyclodextrin, D-Mannose, Glucose, Galactose, Saccharose, Fructose, Xylose, Arabinose, D-Mannit, D-Sorbit, D-oder L-Arabit, Xylit, Idit, Talit, Allit, Altritol, Guilitol, Erythrit, Threit, und D-Gulonsäure-y-lacton;
c) 0,5 bis 5 Gewichtsprozent eines oder mehrerer Anti-Weißtrübungsmittel, ausgewählt aus der Gruppe von Poly(ethylenglykol), Poly(ethylenglykol)-Diester, Poly(propylenglykol), Poly(propylenglykol)-Diester; und Styrol-Isopren-Styrol-Blockcopolymere; und Mischungen derselben;
d) 0,02 bis 1 Gewichtsprozent eines Schmiermittels;
e) 10 bis 60 Gewichtsprozent eines oder mehrerer Verstärkungsmittel; und
f) 0 bis 50 Gewichtsprozent eines polymeren Zähigkeitsvermittlers, umfassend eine reaktive funktionelle Gruppe und/oder ein Metallsalz einer Carbonsäure; mit den Maßgaben, dass die thermoplastische Zusammensetzung weniger als 15 Gewichtsprozent Magnesiumhydroxid und weniger als 0,20 Gewichtsprozent Zinkverbindungen, ausgewählt aus der Gruppe von Zinkborat und Zinkoxid, umfasst; und mit der weiteren Maßgabe, dass mindestens 2 Gewichtsprozent Styrol-Isopren-Styrol-Blockcopolymeren vorhanden sind, wenn keine anderen aus dieser Gruppe ausgewählten Anti-Weißtrübungsmittel vorhanden sind; und wobei alle Gewichtsprozente auf das Gesamtgewicht der Polyamidzusammensetzung bezogen sind.

2. Thermoplastische Polyamidzusammensetzung nach Anspruch 1, wobei das Schmiermittel ausgewählt ist aus der Gruppe umfassend Fettsäuren, Fettsäureester, Fettsäureamide, Fettsäuremetallsalze und oxidiertes Polyethylenwachs besteht.

3. Thermoplastische Polyamidzusammensetzung nach Anspruch 1, wobei das Schmiermittel mit 0,05 bis 0,5 Gewichtsprozent bezogen auf das Gewicht der gesamten thermoplastischen Polyamidzusammensetzung vorliegt.

4. Thermoplastische Polyamidzusammensetzung nach Anspruch 1, wobei das Anti-Weißtrübungsmittel zwischen Polyethylenglykol und Polyethylenglykoldiester ausgewählt ist.

5. Thermoplastische Polyamidzusammensetzung nach Anspruch 1, wobei das Verstärkungsmittel aus Glasfasern besteht.

6. Thermoplastisches Polyamid nach Anspruch 1, wobei die Zusammensetzung ferner umfasst: 0,1 bis 3,0 Gewichtsprozent eines oder mehrerer Farbstoffe.

7. Thermoplastisches Polyamid nach Anspruch 1, wobei die Zusammensetzung ferner umfasst: 1 bis 30 Gewichtsprozent eines oder mehrerer halogenierten Flammschutzmittel.

8. Thermoplastische Polyamidzusammensetzung nach Anspruch 1, wobei das Polyamidharz aus der Gruppe bestehend aus Gruppe (II) Polyamiden ausgewählt ist, welche einen Schmelzpunkt von mindestens 210°C aufweisen, und umfassend ein aliphatisches Polyamid, ausgewählt aus der Gruppe von Poly(tetramethylen hexandiamid), Poly(ε-caprolactam), Poly(hexamethylen hexandiamid/ε-caprolactam), Poly(hexamethylen hexandiamid), Poly(hexamethylen hexandiamid/hexamethylen decandiamid), Poly(hexamethylen hexandiamidete.xamethylen dodecandiamid), Poly(hexamethylen hexandiamideldecamethylen decandiamid), Poly(hexamethylen decandiamid), Poly(hexamethylen dodecandiamid), Poly(hexamethylen tetradecandiamid) und Poly(tetramethylen hexandiamid/2-methylpentamethylen hexandiamid);
Gruppe (III) Polyamide, welche einen Schmelzpunkt von mindestens 210°C aufweisen, und umfassend
(aa) 20 bis 35 Mol% teilaromatischer Wiederholungseinheiten, abgeleitet von Monomeren aus einer oder mehreren der Gruppe, umfassend:
(i) aromatische Dicarbonsäuren mit 8 bis 20 Kohlenstoffatomen und aliphatische Diamine mit 4 bis 20 Kohlenstoffatomen; und
(bb) 65 bis 80 Mol% aliphatische Wiederholungseinheiten, abgeleitet von Monomeren, ausgewählt aus einer oder mehreren der Gruppe, umfassend:
eine aliphatische Dicarbonsäure mit 6 bis 20 Kohlenstoffatomen und das aliphatische Diamin mit 4 bis 20 Kohlenstoffatomen; und
(iii) ein Lactam und/oder eine Aminocarbonsäure mit 4 bis 20 Kohlenstoffatomen; und Gruppe (IV) Polyamide, umfassend:
(cc) 50 bis 95 Mol% teilaromatischer Wiederholungseinheiten, abgeleitet von Monomeren aus einer oder mehreren der Gruppe, umfassend:
(iv) aromatische Dicarbonsäuren mit 8 bis 20 Kohlenstoffatomen und aliphatische Diamine mit 4 bis 20 Kohlenstoffatomen; und
(gg) 5 bis 50 Mol% aliphatischer Wiederholungseinheiten, abgeleitet von Monomeren, ausgewählt aus einer oder mehreren der Gruppe, umfassend:
(v) eine aliphatische Dicarbonsäure mit 6 bis 20 Kohlenstoffatomen und wobei das aliphatische Diamin 4 bis 20 Kohlenstoffatomen aufweist; und ein Lactam und/oder eine Aminocarbonsäure mit 4 bis 20 Kohlenstoffatomen.

9. Thermoplastische Polyamidzusammensetzung gemäß Anspruch 8, wobei das Polyamidharz aus der Gruppe bestehend aus Poly(ε-caprolactam), Poly(hexamethylen hexandiamid) und Poly(hexamethylen Terephthalamid-/Hexamethylen hexandiamid) ausgewählt ist.

10. Polyamidzusammensetzung nach Anspruch 1, wobei (5 Zoll (12,7 cm) x 3 Zoll (7,62 cm) x 2 mm) große, mit der Polyamidzusammensetzung vorbereitete, einer Prüftemperatur von 85°C und einer relativen Luftfeuchtigkeit von 85% für einen Zeitraum von 7 Tagen in einer Luftatmosphäre ausgesetzte Testplatten einen bei 110° Reflexion mit einem Mehrwinkel-Spektrophotometer bestimmten ΔL-Wert aufweisen, welcher, im Vergleich zu einer unbehandelten Vergleichsprobe identischer Zusammensetzung, mindestens 25 Prozent kleiner als der Wert der gleichen Zusammensetzung in Abwesenheit des Anti-Weißtrübungsmittels ist, wobei L ein Maß für die Weiße im CIELAB Farbraum ist.

11. Geformter oder extrudierter Gegenstand, welcher aus einer thermoplastischen Polyamidzusammensetzung nach Anspruch 1 hergestellt ist.

## Revendications

1. Composition de polyamide thermoplastique comprenant
a) une résine de polyamide ayant un point de fusion et/ou une température de transition vitreuse;
b) de 0,1 à 10 pour cent en poids d'un ou plusieurs poly(alcools hydriques) ayant un à deux groupes hydroxyle sélectionnés dans le groupe constitué du glycérol, du triméthylolpropane, du 2,3-di-(2'-hydroxyéthyl)-cyclohexan-1-ol, de l'hexane-1,2,6-triol, du 1,1,1-tris-(hydroxyméthyl)éthane, 3-(2'-hydroxyéthoxy)-propane-1,2-diol, 3-(2'-hydroxypropoxy)-propane-1,2-diol, 2-(2'-hydroxyéthoxy)-hexane-1,2-diol, 6-(2'-hydroxypropoxy)-hexane-1,2-diol, 1,1,1-tris-[(2'-hydroxyéthoxy)-méthyl]-éthane, 1,1,1-tris-[(2'-hydroxypropoxy)-méthyl]-propane, 1,1,1-tris-(4'-hydroxyphényl)-éthane, 1,1,1-tris-(hydroxyphényl)-propane, 1,1,3-tris-(dihydroxy-3-méthylphényl)-propane, 1,1,4-tris-(dihydroxyphényl)-butane, 1,1,5-tris-(hydroxyphényl)-3-méthylpentane, di-triméthylolpropane, pentaérythritol, dipentaérythritol, et du tripentaérythritol, de la cyclodextrine, du D-mannose, glucose, galactose, saccharose, fructose, xylose, de l'arabinose, du D-mannitol, D-sorbitol, D- ou L-arabitol, xylitol, de l'iditol, du talitol, de l'allitol, de l'altritol, du guilitol, de l'érythritol, du thréitol, et de la D-gulonique-y-lactone;
c) de 0,5 à 5 pour cent en poids d'un ou plusieurs agents anti-blanchissement sélectionnés dans le groupe constitué du poly(éthylène glycol), des diesters de poly(éthylène glycol), du poly(propylène glycol), des diesters de poly(propylène glycol); et des copolymères séquencés de styrène-isoprène-styrène; et de leurs mélanges;
d) de 0,02 à 1 pour cent en poids d'un lubrifiant;
e) de 10 à 60 pour cent en poids d'un ou plusieurs agents de renfort; et
f) de 0 à 50 pour cent en poids d'un agent rigidifiant polymère comprenant un groupe fonctionnel réactif et/ou un sel métallique d'un acide carboxylique; à condition que la composition thermoplastique comprenne moins de 15 pour cent en poids d'hydroxyde de magnésium et moins de 0,20 pour cent en poids de composés de zinc sélectionnés dans le groupe constitué du borate de zinc et de l'oxyde de zinc; et à condition en outre qu'au moins 2 pour cent en poids des copolymères séquencés de styrène-isoprène-styrène soient présents lorsqu'aucuns autres agents anti-blanchissement sélectionnés dans le groupe sont présents; et où tous les pourcentages en poids sont basés sur le poids total de la composition de polyamide.

2. Composition de polyamide thermoplastique selon la revendication 1 où le lubrifiant est sélectionné dans le groupe constitué des acides gras, des esters d'acide gras, des amides d'acide gras, des sels métalliques d'acide gras, et de la cire de polyéthylène oxydé.

3. Composition de polyamide thermoplastique selon la revendication 1, le lubrifiant étant présent à 0,05 à 0,5 pour cent en poids sur la base du poids de la composition totale de polyamide thermoplastique.

4. Composition de polyamide thermoplastique selon la revendication 1, l'agent anti-blanchissement étant sélectionné parmi le polyéthylène glycol et les diesters de polyéthylène glycol.

5. Composition de polyamide thermoplastique selon la revendication 1, l'agent de renfort étant la fibre de verre.

6. Polyamide thermoplastique selon la revendication 1, la composition comprenant en outre: de 0,1 à 3,0 pour cent en poids d'un ou plusieurs colorants.

7. Polyamide thermoplastique selon la revendication 1, la composition comprenant en outre: de 1 à 30 pour cent en poids d'un ou plusieurs agents ignifuges halogénés.

8. Composition de polyamide thermoplastique selon la revendication 1, la résine de polyamide étant sélectionnée dans le groupe constitué des polyamides du groupe (II) ayant un point de fusion d'au moins 210°C, et comprenant un polyamide aliphatique sélectionné dans le groupe constitué du poly(tétraméthylène hexanediamide), poly(ε-caprolactame), poly(hexaméthylène hexanediamide/ε-caprolactame), poly(hexaméthylène hexanediamide), poly(hexaméthylène hexanediamide/hexaméthylène décanediamide), poly(hexaméthylène hexanediamidete.xaméthylène dodécanediamide), poly(hexaméthylène hexanediamidedécaméthylène décanediamide), poly(hexaméthylène décanediamide), poly(hexaméthylène dodécanediamide), poly(hexaméthylène tétradécanediamide), et du poly(tétraméthylène hexanediamide/2-méthylpentaméthylène hexanediamide);
des polyamides du groupe (III) ayant un point de fusion d'au moins 210°C, et comprenant
(aa) de 20 à 35 pour cent en mole de motifs de répétition semi-aromatiques dérivés des monomères sélectionnés parmi un ou plusieurs du groupe constitué:
(i) des acides dicarboxyliques aromatiques ayant de 8 à 20 atomes de carbone et des diamines aliphatiques ayant de 4 à 20 atomes de carbone; et
(bb) de 65 à 80 pour cent en mole de motifs de répétition aliphatiques dérivés des monomères sélectionnés parmi un ou plusieurs du groupe constitué de:
un acide dicarboxylique aliphatique ayant 6 à 20 atomes de carbone et ladite diamine aliphatique ayant 4 à 20 atomes de carbone; et
(iii) d'un lactame et/ou d'un acide aminocarboxylique ayant 4 à 20 atomes de carbone; et des polyamides du groupe (IV) comprenant:
(cc) de 50 à 95 pour cent en mole de motifs de répétition semi-aromatiques dérivés des monomères sélectionnés parmi un ou plusieurs du groupe constitué:
(iv) des acides dicarboxyliques aromatiques ayant 8 à 20 atomes de carbone et des diamines aliphatiques ayant 4 à 20 atomes de carbone; et
(gg) de 5 à 50 pour cent en mole de motifs de répétition aliphatiques dérivés des monomères sélectionnés parmi un ou plusieurs du groupe constitué:
(v) d'un acide dicarboxylique aliphatique ayant 6 à 20 atomes de carbone et ladite diamine aliphatique ayant 4 à 20 atomes de carbone; et d'un lactame et/ou d'un acide aminocarboxylique ayant 4 à 20 atomes de carbone.

9. Composition de polyamide thermoplastique selon la revendication 8, la résine de polyamide étant sélectionnée dans le groupe constitué du poly(ε-caprolactame), du poly(hexaméthylène hexanediamide), et du poly(hexaméthylène téréphtalamide/hexaméthylène hexanediamide).

10. Composition de polyamide selon la revendication 1, dans laquelle les plaques de test de 5 po (12,7 cm) x 3 po (7,62 cm) x 2 mm préparées à partir de ladite composition de polyamide, lorsqu'exposées à une température de test de 85°C et une humidité relative de 85 %, sur une durée de test de 7 jours dans une atmosphère d'air, avaient une valeur ΔL, *versus* un témoin non traité de composition identique, déterminée sous une réflexion de 110° avec un spectrophotomètre multi-angle, d'au moins 25 pour cent inférieure à celle de la même composition exempte d'agent anti-blanchissement, L étant une mesure du blanchissement sur l'espace de couleur CIELAB.

11. Article moulé ou extrudé fabriqué à partir de la composition de polyamide thermoplastique selon la revendication 1.
